(19) Europäisches Patentamt / European Patent Office / Office européen des brevets

(11) **EP 2 713 772 B1**

(12) **EUROPEAN PATENT SPECIFICATION**

(45) Date of publication and mention
of the grant of the patent:
**06.04.2016 Bulletin 2016/14**

(21) Application number: **12718265.7**

(22) Date of filing: **07.05.2012**

(51) Int Cl.:
*A23L 5/10* (2016.01)          *A23L 29/212* (2016.01)
*A23L 19/00* (2016.01)          *A23L 23/10* (2016.01)
*A23L 3/48* (2006.01)          *A23L 27/10* (2016.01)

(86) International application number:
**PCT/EP2012/058348**

(87) International publication number:
**WO 2012/159873 (29.11.2012 Gazette 2012/48)**

(54) **A PROCESS FOR PREPARING A DEHYDRATED FOOD COMPOSITION**

HERSTELLUNGSVERFAHREN FÜR EIN DEHYDRIERTES LEBENSMITTELPRODUKT

PROCÉDÉ DE PRÉPARATION D'UNE COMPOSITION ALIMENTAIRE DÉSHYDRATÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.05.2011 EP 11167692**

(43) Date of publication of application:
**09.04.2014 Bulletin 2014/15**

(73) Proprietors:
• **Unilever N.V.
3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**
• **Unilever PLC
London, Greater London EC4Y 0DY (GB)**
Designated Contracting States:
**CY GB IE MT**

(72) Inventors:
• **BECK, Stephanie
74074 Heilbronn (DE)**
• **REUSS, Tanja
74074 Heilbronn (DE)**

(74) Representative: **Tjon, Hon Kong Guno
Unilever N.V.
Unilever Patent Group
Olivier van Noortlaan 120
3133 AT Vlaardingen (NL)**

(56) References cited:
**GB-A- 1 335 787      US-A- 3 940 505
US-A- 4 781 937      US-B2- 6 730 345**

• **Hess, O: "Wiener Küche", 1913, Verlag Carl
Ueberreuter, Wien, XP002681802, page 126**

**Description**

TECHNICAL FIELD OF THE INVENTION

The present invention relates to a process for preparing a dehydrated food composition, said process comprising the preparation of a vegetable-based puree and dehydration of said by puree by drum drying. The dehydrated food composition so obtained can be stored for a long period prior to reconstitution with water and imparts a very balanced, authentic vegetable flavour upon such reconstitution.

BACKGROUND OF THE INVENTION

Vegetables, including herbs and spices, are widely used in food products. Since vegetables are seasonal and because they are very sensitive to spoilage due to their high water content, they are widely employed in dehydrated form in the manufacture of foodstuffs. However, the drying processes employed to produce dehydrated vegetables often have an adverse effect on the flavour quality of these dehydrated vegetables. Frequently, desirable flavour notes are lost during the drying process as a result of volatilisation and/or degradation of key flavour substances. Furthermore, undesirable flavour notes can be generated during the drying process as a result chemical reactions that are promoted by heat and/or the presence of oxygen. Thus, the flavour quality of foodstuffs that have been manufactured using dehydrated vegetables may be improved by mitigating the adverse effects of the drying process on the flavour quality of these dehydrated vegetables.

The prior art comprises several examples of drying processes that aim to retain the flavour characteristics of fresh vegetables. An example of such a process is freeze drying. Freeze drying, however, is a relatively expensive drying technique and as such not suitable for widespread use in the production of dehydrated vegetables.

Air drying is widely used to dehydrate vegetables. Air drying is more economical than freeze drying but an important drawback of this drying technique lies in the fact that the flavour quality of the vegetables frequently deteriorates during the drying process, e.g. as a result of flavour losses and oxidative changes.

Another drying technique that has been employed to dehydrate vegetables is drum drying (or roller drying). Drum drying is a method used for drying out pureed vegetables that are applied as a thin film onto the surface of a heated drum. The dried vegetable solids are then scraped off the drum with a knife and recovered in the form of flakes.

Drum drying is a very efficient drying technique and yields a dried material that can easily be handled. An inherent limitation of drum drying of vegetables resides in the requirement that the vegetables must be pureed. The heat exposure on the hot drums can suitably be used to gelatinise starch that is contained in the vegetable puree. As a result, starch containing dehydrated vegetables that have been produced by drum drying have the ability to rapidly swell in aqueous liquids.

GB 845 937 relates to a process for manufacturing a dry pre-cooked soup mix, which comprises forming a mixture of dry soup particles, moistening individual particles of the dry soup mixture to an extent sufficient to render them sticky, causing these sticky particles to firmly adhere together in the form of random aggregates of a size substantially greater than the size of the individual particles, and then removing the excess moisture. Example IV of British patent describes the preparation of a dry tomato soup pre-mix by preparing a mixture of 30% tomato paste, carboxy methyl cellulose, vegetable shortening, rice flour and water (total solids content of the mixture was 14%), cooking the mixture at 85°C for 45 minutes and then drying it on a drum dryer.

GB 1 335 787 concerns a method of forming green pea flakes in which a hydrogenated vegetable oil and a starch are mixed with cooked green split peas and water to form an aqueous slurry and the slurry is dried in a thin film to form flakes.

US 6,340,494 describes a process for producing dry products which can be reconstituted with cold and hot aqueous liquids by roller drying of fruit concentrates and vegetable concentrates containing external starch, wherein flakes obtained by comminution after the roller drying are agglomerated using the fruit concentrates and vegetable concentrates and the resulting agglomerate is subjected to a heat-moisture treatment and simultaneously dried to the desired final water content.

US 6,730,345 describes a method for sautéing onions, comprising:

- cutting at least one cleaned, whole onion to produce onion parts;
- coating said onion parts with a sautéing agent;
- sautéing said onion parts by contacting with an amount of heated air at a temperature of 121-204 °C for 6-60 minutes to produce sautéed onion parts; and,
- treating said sautéed onions, wherein said treatment is selected from the group consisting of freezing, drying, freeze drying, treating with preservatives, and combinations thereof.

US 2004/0013789 describes a process for producing tomato flakes that are stable to cooking by roller-drying an aqueous suspension containing tomato concentrate, foreign starch and pectin or sodium alginate, and by treating the flakes so obtained with an aqueous solution containing calcium ions.

Dehydration of vegetables by means of drum drying as described in the prior art frequently yields dehydrated vegetable products that suffer from astringency and an unbalanced flavour that lacks fullness.

SUMMARY OF THE INVENTION

The inventors have developed a process for preparing a dehydrated vegetable-based food composition that utilizes drum drying, but that yields a dehydrated product that is superior in terms of flavour quality to dehydrated products obtained by the drum drying processes of the prior art.

The inventors have discovered that the flavour quality of drum dried vegetable-based compositions can be improved substantially by heating the vegetable component in intimate contact with oil at a temperature of at least 70°C before dehydrating the heated vegetable component by means of drum drying. Thus, the present invention provides a process for preparing a dehydrated food composition comprising the steps of:

- mixing a vegetable component and oil to produce a vegetable-oil mixture, said vegetable component and said oil together representing at least 70 wt.% of the vegetable-oil mixture said vegetable component containing at least 5 wt.% of vegetables belonging to the genus *Allium,* and said vegetable component being selected from vegetable pieces, vegetable puree, vegetable juice and combinations thereof;
- heating said vegetable-oil mixture at a temperature of at least 70°C;
- if the vegetable-oil mixture is not a puree, comminuting the vegetable-oil mixture before, during, and/or after the heating to produce a puree;
- mixing the puree with a starch component to produce a thickened puree, said starch component being selected from native starch, modified starch and combinations thereof;
- drum drying said thickened puree to form a dehydrated food composition;

said dehydrated food composition comprising 0.1-50% of oil by weight of the total dehydrated food composition and having an Aw of at most 0.45.

Although the inventors do not wish to be bound by theory it is believed that the heating step In the present process enhances certain flavour notes that are partly removed during drum drying and/or generates desirable flavour notes. Many foodstuffs that are prepared with fresh vegetables are heated at some stage during the preparation of the foodstuff. As a result of such heat treatment the flavour of the vegetable component is irreversibly changed. Ideally, dehydrated vegetables should provide a flavour contribution that is similar to the flavour contribution of fresh vegetables in heat processed foodstuffs. In contrast to the drum drying processes of the prior art the process according to the present invention yields a drum dried vegetable-based product that meets this requirement.

DETAILED DESCRIPTION OF THE INVENTION

Accordingly, the present invention relates to a process for preparing a dehydrated food composition comprising the steps of:

A. mixing a vegetable component and oil to produce a vegetable-oil mixture, said vegetable component and said oil together representing at least 70 wt.% of the vegetable-oil mixture, said vegetable component containing at least 5 wt.% of vegetables belonging to the genus *Allium,* and said vegetable component being selected from vegetable pieces, vegetable puree, vegetable juice and combinations thereof;
B. heating said vegetable-oil mixture at a temperature of at least 70°C;
C. if the vegetable-oil mixture is not a puree, comminuting the vegetable-oil mixture before, during and/or after the heating to produce a puree;
D. mixing the puree with a starch component to produce a thickened puree, said starch component being selected from native starch, modified starch and combinations thereof; and
E. drum drying said thickened puree to form a dehydrated food composition;

said dehydrated food composition comprising 0,1-50% of oil by weight of the total dehydrated food composition and having a water activity ($A_w$) of at most 0.45.

The term "vegetable" as used herein refers to an edible plant or part of a plant other than a sweet fruit or seed. Examples of edible plant parts Include leafs, stems and roots of a plant. In the context of the present invention tomato, paprika, beans, peas and mushrooms are considered to be vegetables.

The term "oil" as used herein refers to a lipid selected from the group consisting of triglycerides, diglycerides, monoglycerides, phospholipids and combinations thereof. The oils employed in accordance with the present invention can be liquid or solid at ambient temperature.

The term "comminuting" refers to the breaking up of particles into smaller fragments, especially by subjecting such particles to mechanical force.

The term "puree" as used herein refers to vegetables that have been ground, pressed, blended, and/or sieved to the consistency of a soft creamy paste or thick liquid. Typically, a puree contains less than 10 wt.%, preferably less than 5 wt.% of vegetable particles having diameter of 3 mm or more.

The term "juice" as used herein refers to a liquid that is naturally contained in vegetable tissue and that is obtained from such vegetable tissue by mechanically squeezing or macerating vegetables flesh without the application solvents. The term "juice" also encompasses concentrated juice.

The term "vegetable piece" as used herein refers to a vegetable particle having a weight of at least 0.05 g, preferably of at least 0.1 g.

Whenever reference is made herein to the diameter of individual particles, such as vegetable pieces or vegetable particles within a puree, unless indicated otherwise said diameter should be construed as referring to the mean diameter of such a particle.

The vegetable component that is used as a starting material in the present process preferably comprises vegetable pieces. Most preferably, the vegetable component comprises at least 10 wt.%, most preferably at least 30 wt.% of vegetable pieces.

The vegetable pieces employed in the present process preferably are pieces of fresh or blanched vegetables that after harvesting have not been subjected to preservation techniques such as drying, canning, pickling, salting, sugar crystallisation, food irradiation, preserving in syrup, and/or addition of preservatives. Fresh vegetables that have been frozen to retain their fresh characteristics are also considered fresh vegetables.

The vegetable pieces that may be employed in the present process preferably include vegetables that have cut by e.g. slicing, dicing or chopping. The term "cutting" as used herein refers to the subdividing of vegetables into smaller pieces.

The vegetable component employed in the present process can be derived from a great variety of vegetables. Examples of vegetables from which the vegetable component may suitably be derived include onion, shallot, celery, celeriac, carrot, tomato, paprika, mushroom, parsley, garlic, leek, pumpkin, eggplant, courgette, asparagus, ginger, spinach, turnip, peas, beans, thyme, basil, oregano and combinations thereof. Typically, at least 50 wt.%, more preferably at least 70 wt.% and most preferably at least 90 wt.% of vegetable component are vegetables pieces derived from the latter vegetables.

The benefits of the present process are very evident if the vegetable component comprises vegetables belonging to the genus *Allium*. Examples of vegetables belonging to the genus *Allium* that can advantageously be processed in accordance with the present method include onion, garlic, shallots, leeks, scallions, chives and combinations thereof. The vegetable component comprises at least 5 wt.% of vegetables belonging to the genus *Allium.* More preferably, the vegetable component comprises at least 8 wt.%, most preferably at least 15 wt.% of vegetables belonging to the genus *Allium.*

The inventors have observed that particularly good results can be obtained with the present process if the vegetable component employed is derived from two or more different vegetables. According to a particularly preferred embodiment these two or more vegetables are selected from the group consisting of onion, shallot, celery, celeriac, bell pepper, courgette, eggplant, basil, parsley, thyme, oregano, pumpkin ginger, beans, peas, spinach, asparagus, turnip carrot, tomato, leek, mushrooms, garlic, and combinations thereof.

The oil employed in the present process preferably contains at least 80 wt.%, more preferably at least 90 wit.% of triglycerides. Examples of oils that may be employed in the present process include vegetable oils and milk fat. The oil may be provided in the present process in the form of a water-in-oil emulsion such as margarine or butter. Preferably, the oil is provided in an essentially water-free form. Most preferably, the oil employed is selected from vegetable oil, butter oil and a combination thereof.

The heating of the vegetable-oil mixture preferably takes place at a temperature in the range of 70-150°C. At the lower end of this temperature range the heating times can suitably be in the range of e.g. 10 minutes up to hours, whereas at the upper end of the range adequate heating times are measured in seconds. In a preferred embodiment of the present process the vegetable-oil mixture is heated to a temperature in the range of 70-150°C for a minimum period of time $t_{min}$, wherein $t_{min}$ is calculated as a function of the heating temperature T in accordance with the following equation:

$$t_{min} = 1 + ((150-T)^3/20,000)^2.$$

In the following table shows heating times calculated for different heating temperatures using this equation:

| Temperature (°C) | Heating time (sec) |
|---|---|
| 70 | 656.4 |
| 80 | 295.1 |
| 90 | 117.6 |
| 100 | 40.1 |
| 110 | 11.2 |
| 120 | 2.8 |
| 130 | 1.2 |
| 140 | 1.0 |
| 150 | 1.0 |

According to a particularly preferred embodiment, the vegetable-oil mixture is heated to 75-120°C for a minimum period of time $t_{min}$, wherein $t_{min}$ is calculated as a function of the heating temperature T in accordance with the following equation:

$$t_{min} = 10 + ((120-T)^2/60)^2$$

In the following table shows heating times calculated for different heating temperatures using this equation:

| Temperature (°C) | Heating time (sec) |
|---|---|
| 75 | 1149,1 |
| 80 | 721,1 |
| 90 | 235,0 |
| 100 | 54,4 |
| 110 | 12,8 |
| 120 | 10,0 |

The heating step of the present process has a pronounced impact on the flavour characteristics of the dehydrated product. Very good results can be obtained if the vegetable-oil mixture is heated to 75-120°C, preferably to 85-100°C, for 0.5-30 minutes.

During the heating of the vegetable-oil mixture moisture loss may occur as a result of evaporation. Typically, not more than 50% of the water contained in the mixture is lost during the heating step. Even more preferably, not more than 20% of the water is lost during heating.

In the preparation of the vegetable-oil mixture advantageously only a minor amount of oil is used. Accordingly, in a particularly preferred embodiment the vegetable-oil mixture is prepared by combining 100 parts by weight of vegetable component with 0.5-10 parts by weight of oil, even more preferably by combining 100 parts by weight of vegetable component with 1-6 parts by weight of oil

Typically, the vegetable-oil mixture contains 0.5-10 wt.%, more preferably 1-6 wt.% of oil when the heating of the mixture commences.

The vegetable-oil mixture may suitably contain other components besides the vegetable component and oil, e.g. seasoning, spices, dried herbs, salt and/or sugar. Preferably, the vegetable component and the oil together represent at least 90 wt.% of the vegetable-oil mixture that is heated in the present process prior to drum drying.

The puree that is mixed with the starch component advantageously contains no more than a minor amount of vegetable particles having a diameter of more than 2 mm. Accordingly, in a preferred embodiment at least 90 wt.%, more preferably at least 95 wt.% of the puree consists or vegetable particles having a diameter of less than 2 mm, more preferably of less than 1 mm.

In case the vegetable-oil mixture contains vegetable pieces, said mixture can suitably be comminuted to produce a puree before, during or after the heating. The invention also encompasses a process in which comminution occurs during at least two of these three phases. According to a particularly preferred embodiment, comminution of a vegetable-oil mixture containing vegetable pieces occurs simultaneously to heating in the present process.

In the present process the starch component is typically added to the puree in an amount of 1-80% by weight of the vegetable component, more preferably 2-60% by weight of the vegetable component. According to a particularly preferred embodiment, the starch component is a native starch.

Before the drum drying, other components besides the starch component may be added to the puree. Examples of such components include vegetable puree, vegetable juice and water. Preferably, the heat treated puree obtained from steps A) to C) of the present process represents at least 20 wt.%, more preferably at least 30 wt.% of the thickened puree that is subjected to drum drying.

The water content of thickened puree that is applied onto the heated drum at the beginning of the drum drying typically lies in the range of 40-95 wt.%. Even more preferably, said water content lies in the range of 50-90 wt.%.

The temperature of the drums employed during drum drying greatly affects the flavour quality of the dehydrated food composition. Preferably, the thickened puree is drum dried on drums that are heated to 110-180°C. Particularly good results can be obtained if the thickened puree is dried on drums that are heated to 120-150°C.

The present process preferably yields a dehydrated food composition in the form of flakes. The dehydrated food composition typically has a bulk density of 40-500 g/l, more preferably of 50-300 g/l. The water activity of the dehydrated food composition preferably lies in the range of 0.10-0.40.

The dehydrated food composition preferably contains 0.5-40 wt.%, most preferably 2-30wt.% of oil.

The dehydrated food composition produced by the process described herein before is advantageously combined with one or more other edible ingredients to produce an instant dry mix that can be reconstituted with hot water to produce a soup, a sauce, a gravy, a meal maker, a side dish, a seasoning or a bouillon. Typically, the dehydrated food composition is combined with one or more other ingredients in such amounts that it represents 1-80 wt.%, more preferably 3-50 wt.% of the instant dry mix.

Another aspect of the present invention relates to a dehydrated food composition obtained by the process described herein or an instant dry mix obtained by a process as described herein.

The invention is further illustrated by the following non-limiting examples.

EXAMPLES

Example 1

A dehydrated food composition according to the invention (Product 1.1) was prepared as follows. A mixture of 5 kg frozen carrot cubes, 5 kg frozen onion cubes, 2.5 kg frozen celery cubes and 0.4 kg olive oil was added in a Stephan Cutter, heated and was kept at a temperature of 95-100°C for 5 minutes. The blend was comminuted during the heating to produce a puree. The puree was then mixed with 0.4 kg pea starch and drum dried at a drying temperature of 130°C. The product so obtained had an oil content of 19 wt.% and an $A_w$ of 0.2.

Another dehydrated food composition (Product 1.2) was prepared in the same manner, but without the heating step.

Product 1.1 and Product 1.2 were sensorially evaluated (Quantitative Descriptive Analysis) after 10 g of the product had been stirred into 250 ml of boiling water and had been allowed to simmer for 1 minute. The results of this sensory evaluation were as follows:

In comparison to Product 1.2, Product 1.1 had a stronger roasted and vegetable smell, a fuller taste and stronger sweet and roasted onion taste. Product 1.2 had a strong boiled onion note and sour smell than Product 1.1.

An expert panel clearly preferred Product 1.1 over Product 1.2.

Example 2

A dehydrated food composition according to the invention (Product 2.1) was prepared as follows. A mixture of 10 kg frozen onion cubes and 0.3 kg palm oil was added in a Stephan Cutter, heated and kept at a temperature of 95-100°C for 5 minutes. The blend was comminuted during the heating to produce a puree. 7 kg of the puree was then mixed with 6 kg tomato paste, 1.3 kg water and 0.5 kg pea starch and drum dried at a drying temperature of 130°C. The product so obtained had an oil content of 7 wt.% and an $A_w$ of 0.3.

Another dehydrated food composition (Product 2.2) was prepared in the same manner as Product 2.1, but without the heating step.

Product 2.1 and Product 2.2 were sensorially evaluated (Quantitative Descriptive Analysis) after 10 g of the product had been stirred into 250 ml of boiling water and had been allowed to simmer for 1 minute. The results of this sensory evaluation were as follows:

In comparison to Product 2.2, Product 2.1 had a stronger roasted grain and heated oillike smell and a fuller taste.

Product 2.2 was found to be more astringent than Product 2.1.

An expert panel clearly preferred Product 2.1 over Product 2.2.

Comparative Example A

A dehydrated product was prepared using the procedure described in Example 1 for the preparation of Product 1.1, except that 8.6 kg of water was added to the mixture of frozen vegetables and oil.
The dehydrated product so obtained (Product A) was found to be similar to Product 1.1 except that the flavour of Product 3 was found to be significantly weaker and less full than the flavour of Product 1.1.

Comparative Example B

A dehydrated product was prepared using the procedure described in Example 1 for the preparation of Product 1.1, except that this time the mixture of puree and pea starch was dried in a cabinet vacuum dryer. The mixture was poured into trays and after the drying the dry product was removed from these trays and crushed to produce a granulate.
The dehydrated granulate so obtained (Product B) was found that have a less intense and less full flavour than Product 1.1. Furthermore, when dispersed into water Product B introduced less than 'thickness' than Product 1.1.

Comparative Example C

A dehydrated product was prepared using the procedure described in Example 1 for the preparation of Product 1.1, except that this time the vegetable puree (without pea starch) was processed further as follows:

- 9 kg of water was admixed and the diluted puree so obtained was homogenized using a two-step high pressure homogenization (150 bar and 30 bar).
- the homogenized blend was spray dried using the following conditions:

  o nozzle pressure: 3.5 bar
  o inlet air temperature: 180°C
  o inlet airflow: 670 kg/h
  o outlet air temperature: 90°C
  o mass flow product (diluted puree): 11.6 kg/h
  o spray tower pressure: -0.5 mbar

The spray dried powder so obtained (Product C) was compared to Product 1.1. The flavour of Product C was much weaker than that of Product 1.1 and contained some undesirable off-notes. Product C was also more pale than Product 1.1. When dispersed into water Product C introduced less than 'thickness' than Product 1.1

**Claims**

1. A process for preparing a dehydrated food composition comprising the steps of:

   A) mixing a vegetable component and oil to produce a vegetable-oil mixture, said vegetable component and said oil together representing at least 70 wt.% of the vegetable-oil mixture, said vegetable component containing at least 5 wt.% of vegetables belonging to the genus *Allium*, and said vegetable component being selected from vegetable pieces, vegetable puree, vegetable juice and combinations thereof;
   B) heating said vegetable-oil mixture at a temperature of at least 70°C;
   C) if the vegetable-oil mixture is not a puree, comminuting the vegetable-oil mixture before, during and/or after the heating to produce a puree;
   D) mixing the puree with a starch component to produce a thickened puree, said starch component being selected from native starch, modified starch and combinations thereof;
   E) drum drying said thickened puree to form a dehydrated food composition;

   said dehydrated food composition comprising 0.1-50% of oil by weight of the total dehydrated food composition and having an $A_w$ of at most 0.45.

**2.** Process according to claim 1 in which the vegetable component is derived from a vegetable selected from the group consisting of onion, shallot, celery, celeriac, carrot, tomato, paprika, mushroom, parsley, garlic, leek, pumpkin, eggplant, courgette, asparagus, ginger, spinach, turnip, peas, beans, thyme, basil, oregano and combinations thereof.

**3.** Process according to any one of the preceding claims, wherein the vegetable component comprises vegetable pieces and wherein the vegetable-oil mixture is comminuted before, during and/or after the heating to produce a puree.

**4.** Process according to any one of the preceding claims, wherein the vegetable-oil mixture is heated to 70-150°C, for a minimum period of time $t_{min}$, wherein $t_{min}$ is calculated in accordance with the following equation:

$$t_{min} = 1 + ((150-T)^3/20.000)^2:$$

wherein T is the temperature expressed in °C and wherein $t_{min}$ is expressed in seconds.

**5.** Process according to any one of the preceding claims, wherein the vegetable component and the oil together represent at least 90 wt.% of the mixture that is heated.

**6.** Process according to any one of the preceding claims, wherein the vegetable-oil mixture is prepared by combining 100 parts by weight of the vegetable component with 0.5-10 parts by weight of oil.

**7.** Process according to any one of the preceding claims, wherein at least 90 wt.% of the puree consists of vegetable particles having a diameter of less than 2 mm.

**8.** Process according to any one of the preceding claims wherein starch component is added to the puree in an amount of 1-80% by weight of the vegetable component, preferably 2-60% by weight of the vegetable component.

**9.** Process according to any one of the preceding claims, wherein the thickened puree has a water content in the range of 40-95 wt.% at the beginning of the drum drying.

**10.** Process according to any one of the preceding claims, wherein the thickened puree is drum dried on drums that are heated to 110-180°C.

**11.** Process according to any one of the preceding claims, wherein the dehydrated food composition has a bulk density of 50-300 g/l.

**12.** Process according to any one of the preceding claims, wherein the dehydrated food composition has an $A_w$ of 0.10-0.40.

**13.** Process according to any one of the preceding claims, wherein the dehydrated food composition comprises 0.5-40 wt.% of oil.

**14.** Process according to any one of the preceding claims, wherein the dehydrated food composition is combined with one or more other edible ingredients to produce an instant dry mix that can be reconstituted with hot water to produce a soup, a sauce, a gravy, a meal maker, a side dish, a seasoning or a bouillon.

**15.** A dehydrated food composition obtained by a process according to any one of claim 1-13 or an instant dry mix obtained by a process according to claim 14.

**Patentansprüche**

**1.** Verfahren zur Herstellung einer dehydratisierten Lebensmittelzusammensetzung, umfassend die Schritte:

A) Mischen eines pflanzlichen Bestandteils und Öl, um eine Pflanzen-Öl-Mischung herzustellen, wobei der pflanzliche Bestandteil und das Öl zusammen mindestens 70 Gew.-% der Pflanzen-Öl-Mischung darstellen, der pflanzliche Bestandteil mindestens 5 Gew.-% Pflanzen enthält, die zur Gattung Allium gehören, und der pflanzliche Bestandteil aus Pflanzenstücken, Pflanzenpürree, Pflanzensaft und Kombinationen davon ausgewählt ist

B) Erhitzen der Pflanzen-Öl-Mischung auf eine Temperatur von mindestens 70°C,

C) wenn die Pflanzen-Öl-Mischung kein Püree ist, Zerkleinern der Pflanzen-Öl-Mischung vor, während und/oder nach dem Erhitzen, um ein Püree herzustellen,

D) Mischen des Pürees mit einem Stärkebestandteil, um ein eingedicktes Püree herzustellen, wobei der Stärkebestandteil aus nativer Stärke, modifizierter Stärke und Kombinationen davon ausgewählt ist,

E) Walzentrocknen des eingedickten Pürees, um eine dehydratisierte Lebensmittelzusammensetzung zu bilden,

wobei die dehydratisierte Lebensmittelzusammensetzung 0,1-50% Öl, bezogen auf das Gewicht der gesamten dehydratisierten Lebensmittelzusammensetzung, enthält und einen $A_w$ von höchstens 0,45 aufweist.

2. Verfahren nach Anspruch 1, bei dem der pflanzliche Bestandteil von einer Pflanze abgeleitet worden ist, die aus der aus Zwiebel, Schalotte, Sellerie, Knollensellerie, Möhren, Tomate, Paprika, Pilz, Petersilie, Knoblauch, Lauch, Kürbis, Aubergine, Zucchini, Spargel, Ingwer, Spinat, Rübe, Erbsen, Bohnen, Thymian, Basilikum, Oregano und Kombinationen davon bestehenden Gruppe ausgewählt ist.

3. Verfahren nach irgendeinem der vorhergehenden Ansprüche, wobei der pflanzliche Bestandteil Pflanzenstücke umfasst und wobei die Pflanzen-Öl-Mischung vor, während und/oder nach dem Erhitzen zerkleinert wird, um ein Püree herzustellen.

4. Verfahren nach irgendeinem der vorhergehenden Ansprüche, wobei die Pflanzen-Öl-Mischung für eine Mindestdauer der Zeit $t_{min}$ auf 70 bis 150°C erhitzt wird, wobei $t_{min}$ entsprechend der folgenden Gleichung berechnet wird:

$$t_{min} = 1 + ((150\text{-}T)^3/20.000)^2,$$

worin T die Temperatur, ausgedrückt in °C, ist und worin $t_{min}$ in Sekunden ausgedrückt ist.

5. Verfahren nach irgendeinem der vorhergehenden Ansprüche, wobei der pflanzliche Bestandteil und das Öl zusammen mindestens 90 Gew.-% der Mischung, die erhitzt wird, darstellen.

6. Verfahren nach irgendeinem der vorhergehenden Ansprüche, wobei die Pflanzen-Öl-Mischung hergestellt wird, indem 100 Gewichtsteile des pflanzlichen Bestandteils mit 0,5-10 Gewichtsteilen Öl kombiniert werden.

7. Verfahren nach irgendeinem der vorhergehenden Ansprüche, wobei mindestens 90 Gew.-% des Pürees aus pflanzlichen Partikeln eines Durchmessers von weniger als 2 mm bestehen.

8. Verfahren nach irgendeinem der vorhergehenden Ansprüche, wobei der Stärkebestandteil in einer Menge von 1-80 Gew.-% des pflanzlichen Bestandteils, vorzugsweise 2-60 Gew.-% des pflanzlichen Bestandteils, zu dem Püree gegeben wird.

9. Verfahren nach irgendeinem der vorhergehenden Ansprüche, wobei das eingedickte Püree zu Beginn des Walzentrocknens einen Wassergehalt in dem Bereich von 40-95 Gew.-% aufweist.

10. Verfahren nach irgendeinem der vorhergehenden Ansprüche, wobei das eingedickte Püree auf Walzen, die auf 110-180°C aufgeheizt sind, walzengetrocknet wird.

11. Verfahren nach irgendeinem der vorhergehenden Ansprüche, wobei die dehydratisierte Lebensmittelzusammensetzung eine Schüttdichte von 50-300 g/l aufweist.

12. Verfahren nach irgendeinem der vorhergehenden Ansprüche, wobei die dehydratisierte Lebensmittelzusammensetzung einen $A_w$ von 0,10-0,40 aufweist.

13. Verfahren nach irgendeinem der vorhergehenden Ansprüche, wobei die dehydratisierte Lebensmittelzusammensetzung 0,5-40 Gew.-% Öl umfasst.

**14.** Verfahren nach irgendeinem der vorhergehenden Ansprüche, wobei die dehydratisierte Lebensmittelzusammensetzung mit einem oder mehreren anderen verzehrbaren Bestandteilen kombiniert wird, um eine tafelfertige Trockenmischung herzustellen, die mit heißem Wasser aufbereitet werden kann, um eine Suppe, eine Soße, einen Bratensaft, einen Mahlzeitzubereiter, eine Beilage, ein Gewürzmittel oder ein Boullion herzustellen.

**15.** Dehydratisierte Lebensmittelzusammensetzung, erhalten durch ein Verfahren nach irgendeinem der Ansprüche 1-13 oder eine tafelfertige Trockenmischung, erhalten durch ein Verfahren nach Anspruch 14.

**Revendications**

**1.** Procédé de préparation d'une composition alimentaire déshydratée comprenant les étapes :

A) de mélange d'un constituant de légume et d'huile pour produire un mélange légume-huile, ledit constituant de légume et ladite huile représentant ensemble au moins 70 % en masse du mélange légume-huile, ledit constituant de légume contenant au moins 5 % en masse de légumes appartenant au genre *Allium*, et ledit constituant de légume étant choisi parmi des morceaux de légume, une purée de légume, un jus de légume et des combinaisons de ceux-ci ;
B) de chauffage dudit mélange légume-huile à une température d'au moins 70°C;
C) si le mélange légume-huile n'est pas une purée, de broyage du mélange légume-huile avant, pendant et/ou après le chauffage pour produire une purée ;
D) de mélange de la purée avec un constituant d'amidon pour produire une purée épaissie, ledit constituant d'amidon étant choisi parmi de l'amidon natif, de l'amidon modifié et des combinaisons de ceux-ci ;
E) de séchage en tambour de ladite purée épaissie pour former une composition alimentaire déshydratée ;

ladite composition alimentaire déshydratée comprenant 0,1-50 % d'huile en masse de la composition alimentaire déshydratée totale et présentant un Aw d'au plus 0,45.

**2.** Procédé selon la revendication 1, dans lequel le constituant de légume est dérivé d'un légume choisi dans le groupe constitué par l'oignon, l'échalote, le céleri, le céleri-rave, la carotte, la tomate, le poivron, le champignon, le persil, l'ail, le poireau, le potiron, l'aubergine, la courgette, l'asperge, le gingembre, l'épinard, le navet, les pois, les haricots, le thym, le basilic, l'origan et des combinaisons de ceux-ci.

**3.** Procédé selon l'une quelconque des revendications précédentes, dans lequel le constituant de légume comprend des morceaux de légume et dans lequel le mélange légume-huile est broyé avant, pendant et/ou après le chauffage pour produire une purée.

**4.** Procédé selon l'une quelconque des revendications précédentes, dans lequel le mélange légume-huile est chauffé à 70-150 °C, pendant une période minimale de temps $t_{min}$, où $t_{min}$ est calculé selon l'équation suivante :

$$t_{min} = 1 + ((150-T)^3/20\ 000)^2,$$

où T est la température exprimée en °C et où $t_{min}$ est exprimé en secondes.

**5.** Procédé selon l'une quelconque des revendications précédentes, dans lequel le constituant de légume et l'huile représentent ensemble au moins 90 % en masse du mélange qui est chauffé.

**6.** Procédé selon l'une quelconque des revendications précédentes, dans lequel le mélange légume-huile est préparé en combinant 100 parties en masse du constituant de légume avec 0,5-10 parties en masse d'huile.

**7.** Procédé selon l'une quelconque des revendications précédentes, dans lequel au moins 90 % en masse de la purée sont constitués de particules de légume présentant un diamètre inférieur à 2 mm.

**8.** Procédé selon l'une quelconque des revendications précédentes, dans lequel un constituant d'amidon est ajouté à la purée dans une quantité de 1-80 % en masse du constituant de légume, de préférence 2-60 % en masse du constituant de légume.

9. Procédé selon l'une quelconque des revendications précédentes, dans lequel la purée épaissie présente une teneur en eau dans l'intervalle de 40-95 % en masse au début du séchage en tambour.

10. Procédé selon l'une quelconque des revendications précédentes, dans lequel la purée épaissie est séchée en tambour sur des tambours qui sont chauffés à 110-180 °C.

11. Procédé selon l'une quelconque des revendications précédentes, dans lequel la composition alimentaire déshydratée présente une masse volumique apparente de 50-300 g/1.

12. Procédé selon l'une quelconque des revendications précédentes, dans lequel la composition alimentaire déshydratée présente un Aw de 0,10-0,40.

13. Procédé selon l'une quelconque des revendications précédentes, dans lequel la composition alimentaire déshydratée comprend 0,5-40 % en masse d'huile.

14. Procédé selon l'une quelconque des revendications précédentes, dans lequel la composition alimentaire déshydratée est combinée avec un ou plusieurs autres ingrédients comestibles pour produire un mélange sec instantané qui peut être reconstitué avec de l'eau chaude pour produire une soupe, une sauce, un jus de viande, un fabricant de repas, un plat d'accompagnement, un assaisonnement ou un bouillon.

15. Composition alimentaire déshydratée obtenue par un procédé selon l'une quelconque des revendications 1-13 ou mélange sec instantané obtenu par un procédé selon la revendication 14.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 845937 A
- GB 1335787 A
- US 6340494 B
- US 6730345 B
- US 20040013789 A